# EUROPEAN PATENT APPLICATION

(11) **EP 1 712 394 A2**
(43) Date of publication of application: **18.10.2006**
(21) Application number: 06007125.5
(22) Date of filing: 04.04.2006
(51) Int. Cl.: B60K 6/04

(54) **On-vehicle hybrid drive apparatus having a rotational damper**

(30) Priority: 12.04.2005 JP 2005114493
(71) Applicant: NISSAN MOTOR CO., LTD., Yokohama-shi, Kanagawa 221-0023 (JP)
(72) Inventor: Tanishima, Kaori, Isehara-shi Kanagawa 259-1117 (JP); Chiba, Ryugo, Atsugi-shi Kanagawa 243-0807 (JP); Onoyama, Taiichi, Yokohama-shi Kanagawa 240-0006 (JP)
(74) Representative: Grünecker, Kinkeldey, Stockmair & Schwanhäusser Anwaltssozietät

(57) **Abstract**

In an on-vehicle hybrid drive apparatus including a power-transmission shaft (22) transmitting rotation generated from an engine (3) into a transmission (4), and a motor-and-generator (7) fitted on the power-transmission shaft (6) and installed between the engine (3) and the transmission (4), a first friction element (8) is installed on the engine side for coupling the engine (3) with or uncoupling it from the motor-and-generator (7). A second friction element (9) is installed on the transmission side for coupling the motor-and-generator (7) with or uncoupling it from a transmission output shaft (12). A rotating damper (24) is installed downstream of the motor-and-generator (7) and disposed in a rotating-motion transmission system ranging from the motor-and-generator (7) to the transmission output shaft (12). The rotating damper (24) is preferably interleaved in a coaxially abutted shaft portion of a central motor-and-generator shaft (22) and a transmission input shaft (5).

## Description

### TECHNICAL FIELD

The present invention relates to an on-vehicle hybrid drive apparatus using both an internal combustion engine and an electric motor/generator as a propelling power source, and specifically to the improvement of a torsional resonance frequency characteristic of a power transmission system (a rotating-motion transmission system) of the hybrid drive apparatus capable of executing at least an electric-vehicle (EV) mode at which only the electric motor/generator is used as the propelling power source, and a hybrid electric vehicle (HEV) mode at which the engine and the motor/generator are both used as the propelling power source for propulsion in a manner so as to operate the hybrid vehicle at an optimal operating point at which the engine is operated at an optimal fuel consumption rate and the surplus engine power is converted into electric energy by way of generating action of the motor/generator, and the generated electric energy is stored, thereby improving fuel economy.

### BACKGROUND ART

In recent years, there have been proposed and developed various hybrid drive apparatuses executable at least an EV mode and a HEV mode. One such hybrid drive apparatus has been disclosed in Japanese Patent Provisional Publication No. 11-082260 (hereinafter is referred to as "JP11-082260"). In the hybrid drive apparatus of JP11-082260, a motor/generator is installed and fitted on a shaft, which is installed between an engine and a transmission for transmitting or directing torque produced by the engine to the transmission. Also provided are two friction elements. The first friction element is a friction element of the engine side, which is provided for coupling the engine with or uncoupling it from the motor/generator. The second friction element is a friction element of the transmission side, which is provided for coupling the motor/generator with or uncoupling it from the transmission output shaft.

In a similar manner to a rotating-motion transmission system of a typical automatic-transmission equipped automotive vehicle, in a rotating-motion transmission system of the hybrid drive apparatus as disclosed in JP11-082260, torsional resonance tends to occur in particular in a low engine speed range, owing to engine torque fluctuations. The torsional resonance results in uncomfortable vibrations of the vehicle body. As a countermeasure for such torsional resonance, a rotating damper, such as a torsion damper or a dynamic damper, is often used. Such a rotating damper (e.g., a dynamic damper) has been disclosed in Japanese Patent Provisional Publication No. 10-141429 (hereinafter is referred to as "JP10-141429").

### SUMMARY OF THE INVENTION

In installing the rotating damper as disclosed in JP10-141429 in the rotating-motion transmission system of the hybrid drive apparatus, generally, on the basis of the same concept as the installation of the rotating damper (i.e., the torsion damper) in the typical automatic-transmission equipped automotive vehicle, in a practical manner the rotating damper is located just after the engine, that is, interleaved between the engine and the friction element of the engine side. This is because the previously-described torsional resonance is caused by engine torque fluctuations.

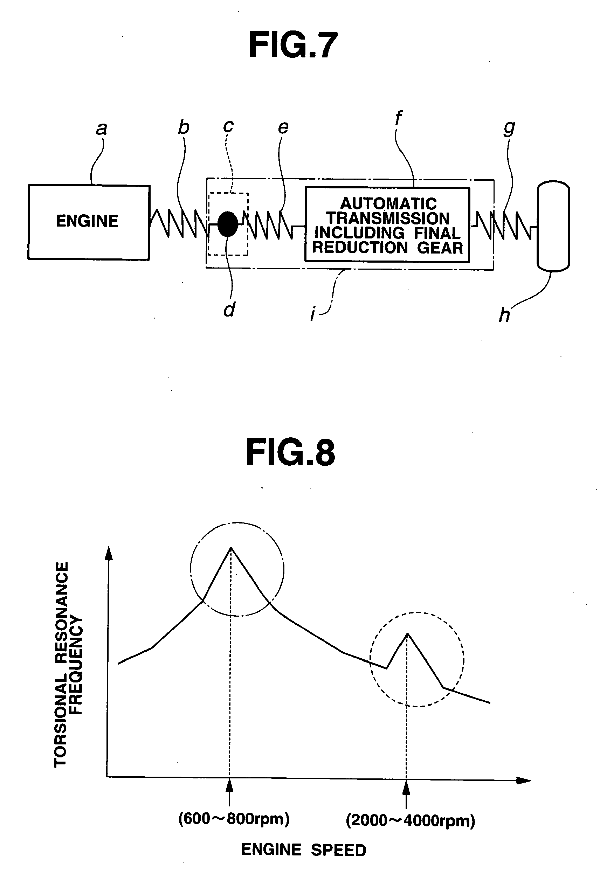

However, assuming that the rotating damper is installed between the engine and the friction element of the engine side, there are some drawbacks hereinafter described in detail in reference to explanatory drawings shown in Figs. 7-10.

First, torsional vibrations occurring in the rotating-motion transmission system of the automatic-transmission equipped vehicle are explained below. On the assumption that a lock-up torque converter, which is provided between an engine and an automatic transmission, is conditioned in a lock-up state wherein an input element (a torque-converter driving member usually referred to as a pump impeller) and an output element (a torque-converter driven member usually referred to as a turbine runner) are directly coupled with each other by way of engagement of a lock-up clutch, the torsional vibration system for the rotating-motion transmission system of the automatic-transmission equipped vehicle employing the rotating damper installed just after the engine can be represented by a simplified vibrating system model as shown in Fig. 7. As can be appreciated from the simplified vibrating system model of Fig. 7, rotation (torque) is transmitted from the engine denoted by "a" through the rotating damper denoted by "b" and built-in the lock-up clutch, and the turbine runner denoted by "d" and constructing a component part of the torque converter denoted by "c" into the transmission input shaft denoted by "e", in that order. The input rotation transmitted into transmission input shaft e is speed-changed by means of the final-reduction-gear equipped automatic transmission denoted by "f", and then the speed-changed rotation is further transmitted via the drive shaft denoted by "g" into the drive wheel denoted by "h". Usually, the previously-noted rotating-motion transmission system, that is, the vibrating system shown in Fig. 7, shows an engine-speed versus torsional resonance frequency characteristic as illustrated in Fig. 8. As can be seen from the torsional resonance frequency characteristic of Fig. 8, in a low engine speed range of approximately 600 to 800 rpm, the rotating member, which is denoted by "i" and comprised of turbine runner d, transmission input shaft e, and automatic transmission f, acts as a vibrating mass, and thus a peak of the torsional resonance frequency occurs owing to engine torque fluctuations in the low engine speed range of approximately 600 to 800 rpm, as indicated by the one-dotted circle in Fig. 8. Additionally, in a middle engine speed range of approximately 2000 to 4000 rpm, the turbine runner d acts as a vibrating mass, and thus a peak of the torsional resonance frequency occurs owing to engine torque fluctuations in the middle engine speed range of approximately 2000 to 4000 rpm, as indicated by the broken circle in Fig. 8. Thus, when the vehicle is running at low engine speeds ranging from 600 to 800 rpm, substantially corresponding to the first peak of the torsional resonance frequency, or at middle engine speeds ranging from 2000 to 4000 rpm, substantially corresponding to the second peak of the torsional resonance frequency, undesirable booming noise, audibly perceived, tends to occur in the interior space of the automatic-transmission equipped vehicle employing the rotating damper installed just after the engine.

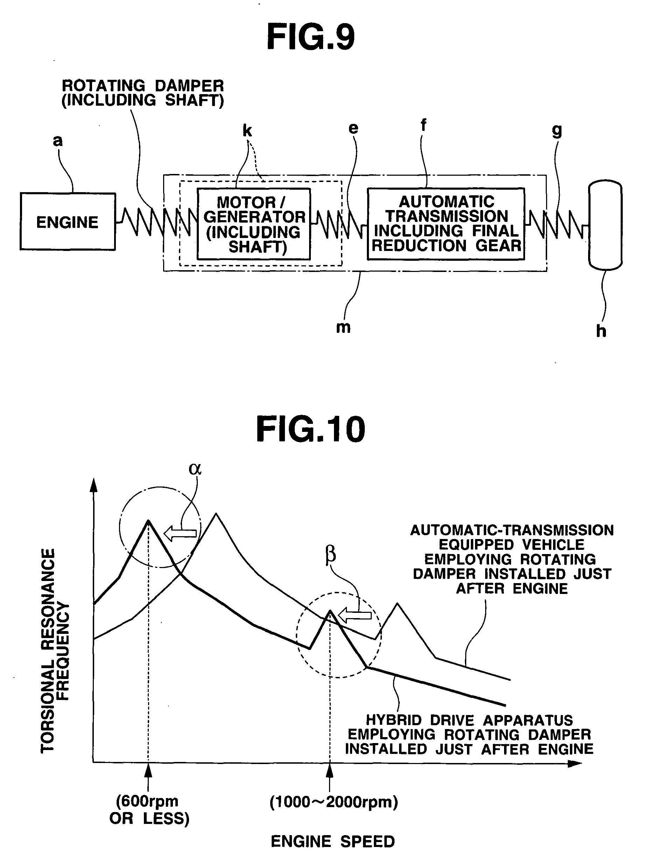

In the same manner as the installation of the rotating damper of the automatic-transmission equipped vehicle, suppose that in the on-vehicle hybrid drive apparatus the rotating damper is installed just after the engine and located between the engine and the motor/generator. Under a specified condition where the friction element of the engine side and the friction element of the transmission side are both engaged, its torsional vibration system can be represented by a simplified vibrating system model as shown in Fig. 9. As can be appreciated from the simplified vibrating system model of Fig. 9, rotation (torque) is transmitted from the engine denoted by "a" through the rotating damper j (including a power-transmission shaft) and a motor/generator k (including the shaft) into transmission input shaft e, in that order. The input rotation transmitted into transmission input shaft e is speed-changed by means of final-reduction-gear equipped automatic transmission f, and then the speed-changed rotation is further transmitted via drive shaft g into drive wheel h. The rotating-motion transmission system of the hybrid drive apparatus employing rotating damper j installed just after engine a, that is, the vibrating system shown in Fig. 9, shows an engine-speed versus torsional resonance frequency characteristic indicated by the thick solid line in Fig. 10. As can be seen from the torsional resonance frequency characteristic indicated by the thick solid line in Fig. 10, in a very low engine speed range of 600 rpm or less, the rotating member, which is denoted by "m" and comprised of motor/generator k (including the shaft), transmission input shaft e, and automatic transmission f, acts as a vibrating mass, and thus a peak of the torsional resonance frequency occurs owing to engine torque fluctuations in the very low engine speed range of 600 rpm or less, as indicated by the one-dotted circle in Fig. 10. Additionally, in a low engine speed range of approximately 1000 to 2000 rpm, the motor/generator k (including the shaft) acts as a vibrating mass, and thus a peak of the torsional resonance frequency occurs owing to engine torque fluctuations in the low engine speed range of approximately 1000 to 2000 rpm, as indicated by the broken circle in Fig. 10. For the purpose of comparison between (i) the torsional resonance frequency characteristic (for the automatic-transmission equipped vehicle employing the rotating damper installed just after the engine) indicated by the fine solid line in Fig. 8 and (ii) the torsional resonance frequency characteristic (for the hybrid drive apparatus employing the rotating damper installed just after the engine) indicated by the thick solid line in Fig. 10, these two torsional resonance frequency characteristic diagrams are shown together in Fig. 10. As can be appreciated from comparison between the two torsional resonance frequency characteristic diagrams, respectively indicated by the thick solid line and the fine solid line in Fig. 10, the first and second peaks of torsional resonance frequencies of the vibrating system of the hybrid drive apparatus tend to shift in a lower-engine-speed direction, as clearly shown by the arrows α and β in Fig. 10, as compared to the peaks of torsional resonance frequencies of the vibrating system of the automatic-transmission equipped vehicle. This is because the rotational inertia mass of motor/generator k (including the shaft) of the vibrating system (see Fig. 9) of the hybrid drive apparatus is greater than that of turbine runner d of the vibrating system (see Fig. 7) of the automatic-transmission equipped vehicle. The very low engine speed range of 600 rpm or less, corresponds to a high intensity vibration range wherein a high intensity vibration (booming noise caused by the peak of the torsional resonance frequency) is perceived audibly and/or tactually, and characterized as sensation of pressure by the ear of each vehicle occupant. Therefore, assuming that the first peak of the torsional resonance frequency occurs in the very low engine speed range of 600 rpm or less, the vehicle occupants may experience excessively uncomfortable booming noise caused by the first resonant-frequency peak. Additionally, the low engine speed range of approximately 1000 to 2000 rpm, in which the second peak of the torsional resonance frequency tends to occur in the hybrid drive apparatus employing the rotating damper installed just after the engine, substantially corresponds to a normal speed range. Therefore, assuming that the second peak of the torsional resonance frequency occurs in the low engine speed range of approximately 1000 to 2000 rpm (i.e., in the normal speed range), such booming noise, occurring in the low speed range owing to the second resonant-frequency peak, would be likely to cause the vehicle occupants to continually feel considerable discomfort during driving of the hybrid vehicle in the normal speed range.

On way to avoid these problems is a so-called slip control for the friction element of the engine side, according to which engine torque fluctuations can be absorbed or attenuated. However, the slip control for the friction element means that a certain amount of slippage (in other words, a frictional loss or an energy loss) in the friction element can be permitted. As a matter of course, the slippage deteriorates fuel economy. Practically, it is difficult to efficiently absorb positive and negative engine torque fluctuations by way of only the slip control for the friction element. Additionally, addition of the slip control system to the hybrid drive apparatus leads to another problem of increased production costs.

The inventors of the present invention have discovered that it is possible to optimize or tune up the torsional resonance frequency characteristic of the vibrating system of the rotating-motion transmission system of the hybrid drive apparatus by installing or placing the rotating damper after the motor/generator instead of installing the same just after the engine. More concretely, by installing the rotating damper after the motor/generator, a low-speed-side resonant-frequency peak-generating engine speed at which the first peak of the torsional resonance frequency occurs, can be further shifted in a lower-engine-speed direction, and as a result the first resonant-frequency peak can occur outside of the normal engine speed range. In addition to the above, by installing the rotating damper after the motor/generator, a high-speed-side resonant-frequency peak-generating engine speed at which the second peak of the torsional resonance frequency occurs, can be further shifted in a higher-engine-speed direction, and as a result the second resonant-frequency peak can occur outside of the normal engine speed range.

It is, therefore in view of the previously-described disadvantages of the prior art, an object of the invention to provide a hybrid drive apparatus which avoids the aforementioned disadvantages by contriving the installation position of a rotating damper placed in a vibrating system of the hybrid drive apparatus, thereby optimizing a torsional resonance frequency characteristic of the vibrating system.

In order to accomplish the aforementioned and other objects of the present invention, an on-vehicle hybrid drive apparatus comprises an engine, a transmission, a power-transmission shaft provided to transmit rotation generated from the engine into the transmission, a motor-and-generator fitted on the power-transmission shaft and installed between the engine and the transmission, a first friction element installed on the engine side for coupling the engine with or uncoupling it from the motor-and-generator, a second friction element installed on the transmission side for coupling the motor-and-generator with or uncoupling it from a transmission output shaft, and a rotating damper installed after the motor-and-generator and disposed in a rotating-motion transmission system ranging from the motor-and-generator to the transmission output shaft.

The other objects and features of this invention will become understood from the following description with reference to the accompanying drawings.

### BRIEF DESCRIPTION OF THE DRAWINGS

Fig. 1 is a simplified plan view showing a powertrain of a rear-wheel-drive vehicle employing a hybrid drive apparatus to which the inventive concept can be applied.
Fig. 2A is a simplified plan view showing a powertrain of a rear-wheel-drive vehicle employing another hybrid drive apparatus to which the inventive concept can be applied and whose friction-elements layout differs from that of the hybrid drive apparatus of Fig. 1.
Fig. 2B is a simplified plan view showing a powertrain of a rear-wheel-drive vehicle employing another hybrid drive apparatus to which the inventive concept can be applied and whose friction-elements layout differs from that of each of the hybrid drive apparatuses of Figs. 1 and 2A.
Fig. 3 is a longitudinal cross-sectional view illustrating one embodiment of the hybrid drive apparatus shown in Fig. 1.
Fig. 4 is a simplified vibrating system model of the powertrain of the hybrid drive apparatus of the embodiment.
Fig. 5 is an engine-speed versus torsional resonance frequency characteristic diagram of the powertrain (the vibrating system) of the hybrid drive apparatus of the embodiment.
Fig. 6 is a longitudinal cross-sectional view showing the essential part in a state wherein the hybrid drive apparatus shown in Fig. 3 is mounted on an automotive vehicle.
Fig. 7 is the simplified vibrating system model of the powertrain of the automatic-transmission equipped vehicle employing the rotating damper installed just after the engine.
Fig. 8 is the engine-speed versus torsional resonance frequency characteristic diagram of the powertrain (the vibrating system) shown in Fig. 7.
Fig. 9 is the simplified vibrating system model of the powertrain of the hybrid drive apparatus employing the rotating damper installed just after the engine.
Fig. 10 is the comparative characteristic diagram for the purpose of comparison between the engine-speed versus torsional resonance frequency characteristic (indicated by the fine solid line) of the powertrain (the vibrating system) shown in Fig. 7 and the engine-speed versus torsional resonance frequency characteristic (indicated by the thick solid line) of the powertrain (the vibrating system) shown in Fig. 9.

### DESCRIPTION OF THE PREFERRED EMBODIMENTS

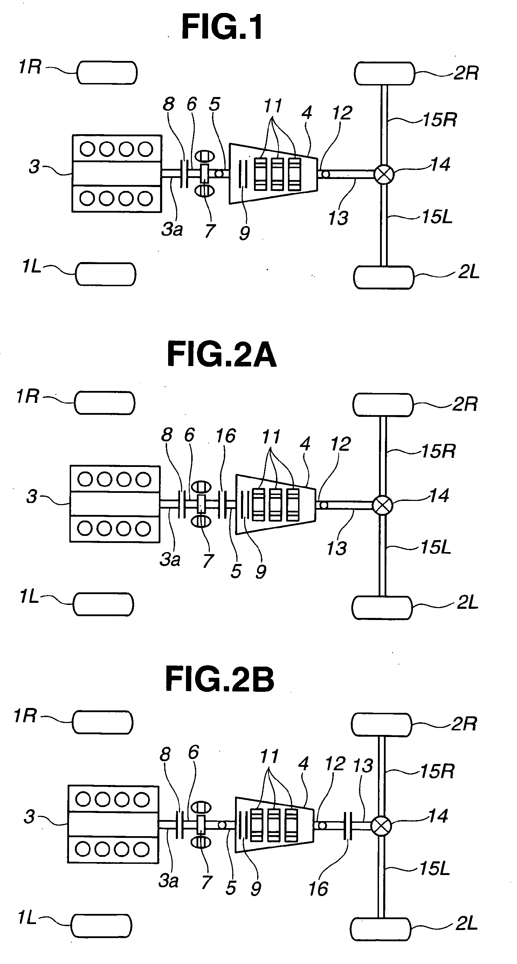

Referring now to the drawings, particularly to Fig. 1, there is shown the powertrain of the front-engine rear-wheel-drive automotive vehicle employing the hybrid drive apparatus of the embodiment. In Fig. 1, reference signs 1L and 1R respectively denote front-left and front-right road wheels, whereas reference signs 2L and 2R respectively denote rear-left and rear-right road wheels. Reference sign 3 denotes an engine. In the powertrain of the hybrid-drive-apparatus equipped vehicle of Fig. 1, engine 3 and an automatic transmission 4 are arranged in tandem in the longitudinal direction of the vehicle. A motor/generator 7 is installed and fitted on a power-transmission shaft, simply, a shaft 6, which is installed engine 3 and automatic transmission 4 for transmitting or routing rotation (torque produced by engine 3) through an engine crankshaft 3a and shaft 6 into a transmission input shaft 5 of automatic transmission 4. Motor/generator 7 serves as an electric motor and also serves as a generator. Motor/generator 7, which is fitted on shaft 6, is arranged between engine 3 and automatic transmission 4. As a friction element of the engine side, an engine clutch 8 is interleaved between motor/generator 7 and engine 3, exactly between shaft 6 and engine crankshaft 3a. By means of engine clutch 8 (the friction element of the engine side), engine 3 and motor/generator 7 are coupled to each other or uncoupled from each other. For instance, as the automatic transmission 4, the automotive vehicle employing the hybrid drive apparatus of the embodiment uses the same configuration and layout as an electronically controlled automatic transmission described in pages C-9 through C-22 of a new model CV35 MANUAL of "SKYLINE", issued on January, 2003 by Nissan Motor co., ltd. A combination of engagement/disengagement (application/release) of each of a plurality of friction elements (clutches/brakes and the like) including at least a forward brake 9, serving as a friction element of the transmission side, is determined by selectively engaging (applying) or disengaging (releasing) the friction elements via working fluid pressure. As a result, the route of power transmission (in other words, a desired shifting gear position) of three planetary gearsets, denoted by reference sign 11, is automatically controlled. Forward brake 9, serving as the friction element of the transmission side, corresponds to a friction element to be applied when selecting a forward gear position (including at least a start-up gear position). Automatic transmission 4 operates to speed-change input rotation transmitted into transmission input shaft 5 at a transmission gear ratio based on a selected range gear position. Then, the speed-changed rotation is routed or transmitted into a transmission output shaft 12. Output rotation is further transmitted from transmission output shaft 12 through a propeller shaft 13, a differential gear device 14, and rear wheel driveshafts 15L and 15R into rear-left and rear-right road wheels 2L and 2R, in that order, for vehicle propulsion.

With the previously-noted powertrain layout, in the presence of a requirement of an electric-vehicle (EV) mode, used when starting the vehicle from a standstill state, engine clutch 8 (the friction element of the engine side) is disengaged, and additionally forward brake 9 (the friction element of the transmission side) is applied, with the result that automatic transmission 4 is conditioned in a gear mode wherein a forward gear is selected. Under these conditions, when motor/generator 7 is driven, only the rotation from motor/generator 7, that is, only the motorgenerator torque is transmitted to transmission input shaft 5. At this time, automatic transmission 4 speed-changes the input rotation transmitted from only the motor/generator into transmission input shaft 5 depending on the selected forward gear position. The speed-changed rotation is further transmitted from transmission output shaft 12 through propeller shaft 13, differential gear 14, and rear-left and rear-right wheel driveshafts 15L and 15R into rear-left and rear-right road wheels 2L and 2R, in that order. In this manner, the vehicle can be operated in the EV mode at which the vehicle travels, while using only the motor/generator 7 as a propelling power source.

The previously-described EV mode refers to the forward gear position. In the presence of a requirement of an EV mode at a reverse gear position, a reverse brake (not shown) is applied instead of forward brake 9, and as a result automatic transmission 4 is conditioned in the reverse gear position. As discussed above, when the reverse gear position is selected, the reverse brake is applied instead of engaging forward brake 9. That is, during the EV mode at the reverse gear position, the reverse brake serves as a friction element of the transmission side.

In the presence of a requirement of a hybrid electric vehicle (HEV) mode, used during vehicle driving at high speeds or during vehicle driving at high load operation, engine clutch 8 (the friction element of the engine side) is engaged, and additionally forward brake 9 (the friction element of the transmission side) is applied, with the result that automatic transmission 4 is conditioned in a gear mode wherein a forward gear is selected. Under these conditions, rotation generated from engine crankshaft 3a of engine 3 and rotation generated from motor/generator 7, in other words, the engine torque and the motor/generator torque are both transmitted into transmission input shaft 5, and then combined in the planetary gearsets. At this time, automatic transmission 4 speed-changes the combined rotation transmitted from both of engine 3 and motor/generator 7 into transmission input shaft 5 depending on the transmission ratio corresponding to the selected forward gear position. The speed-changed rotation is further transmitted from transmission output shaft 12 through propeller shaft 13, differential gear 14, and rear-left and rear-right wheel driveshafts 15L and 15R into rear-left and rear-right road wheels 2L and 2R, in that order. In this manner, the vehicle can be operated in the HEV mode at which the vehicle travels, while using engine 3 as well as motor/generator 7 as a propelling power source.

Suppose that engine 3 is operated at an optimal fuel-consumption-rate point during the HEV mode but a surplus engine power exists. In such a case, motor/generator 7 is operated at a generating mode at which the motor/generator functions as a generator that generates electricity. That is, the surplus engine power (surplus energy) is converted into electric power, and then the generated electric power is stored for propelling the vehicle by way of torque output from motor/generator 7, thus resulting in improved fuel economy (reduced fuel consumption rate of engine 3).

In the powertrain of the vehicle employing the hybrid drive apparatus of the embodiment shown in Fig. 1, the existing forward brake 9 or the existing reverse brake (not shown), installed in automatic transmission 4, is used as the friction element of the transmission side that couples or uncouples motor/generator 7 with or from transmission output shaft 12. As can be seen from the powertrain layout shown in Fig. 2A, as a modification of the friction element of the transmission side, a hybrid powertrain purpose-designed clutch 16 may be further provided. In such a case, clutch 16, serving as the friction element of the transmission side, may be interleaved or disposed in the coaxially abutted shaft portion of power-transmission shaft 6 and transmission input shaft 5, for coupling power-transmission shaft 6 with or uncoupling it from transmission input shaft 5, and whereby it is possible to propel the vehicle at a selected one of the EV mode and the HEV mode. As can be seen from the powertrain layout shown in Fig. 2B, as another modification of the friction element of the transmission side, a hybrid powertrain purpose-designed clutch 16 may be provided in an installation position different from those of the transmission-side friction elements 9 and 16 shown in Figs. 1 and 2A. For instance, as clearly shown in Fig. 2B, clutch 16, serving as the friction element of the transmission side, may be interleaved or disposed in transmission output shaft 12, for coupling motor/generator 7 with or uncoupling it from rear-left and rear-right road wheels (drive wheels) 2L and 2R, and whereby it is possible to propel the vehicle at a selected one of the EV mode and the HEV mode.

By the way, as having explained previously in reference to the simplified vibrating system model of Fig. 7 and the engine-speed versus torsional resonance frequency characteristic of Fig. 8, in the same manner as the automatic-transmission equipped vehicle, in the powertrain layouts of the front-engine rear-wheel-drive vehicles, shown in Figs. 1 and 2A-2B, respectively employing the hybrid drive apparatuses to which the inventive concept can be applied, there is an increased tendency for torsional resonance to occur due to engine torque fluctuations, in particular, in a low engine speed range. The generation of torsional resonance leads to the problem of undesirable vibrations of the vehicle body.

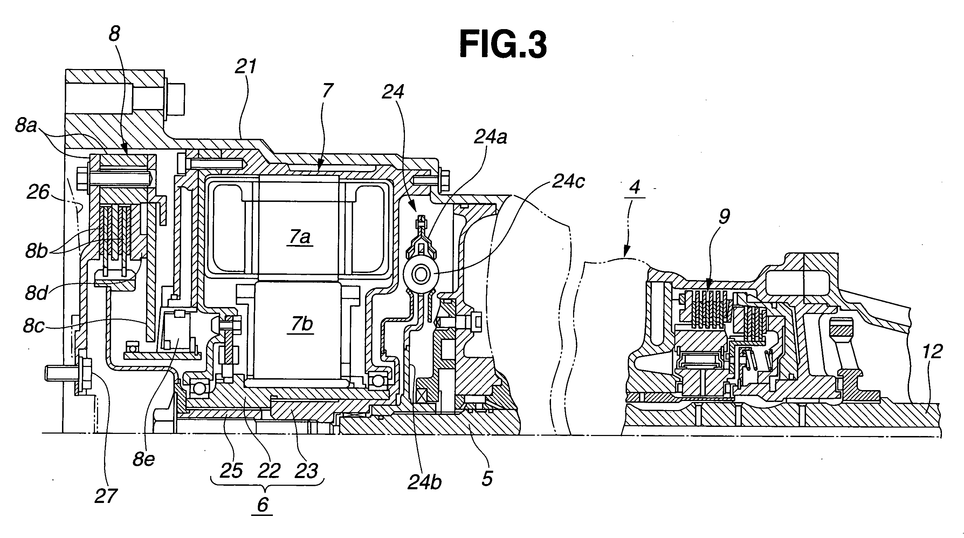

In order to avoid undesirable vehicle-body vibration created due to the torsional resonance, occurring due to engine torque fluctuations, in particular, in the low engine speed range, in the hybrid drive apparatus of the embodiment, an installation position of a rotating damper to be installed in the rotating-motion transmission system of the powertrain is devised as hereunder described in detail. The details of installation of the rotating damper in the powertrain layout shown in Fig. 1 will be described in reference to the real construction drawing shown in Fig. 3.

In the longitudinal cross-sectional view of Fig. 3, reference sign 21 denotes a transmission case. In the same manner as the powertrain layout described in page C-9 of the new model CV35 MANUAL of "SKYLINE", issued on January, 2003 by Nissan Motor co., ltd., transmission input shaft 5, forward brake 9, transmission output shaft 12, and component parts of automatic transmission 4, including planetary gearsets 11 shown in Fig. 1 are accommodated and installed in transmission case 21. In the hybrid drive apparatus of the embodiment, motor/generator 7 is accommodated in the transmission-case bell housing portion (the large-diameter housing portion of the front end of transmission case 21), in which a torque converter is installed in the lock-up torque converter equipped automatic transmission as described in page C-9 of the new model CV35 MANUAL of "SKYLINE", issued on January, 2003 by Nissan Motor co., ltd. That is, motor/generator 3 is installed in a torque-converter storage space of the transmission case, in place of a torque converter. As can be appreciated from the cross section of Fig. 3, motor/generator 7 is comprised of a stator 7a and a rotor 7b coaxially arranged with respect to the common axis of transmission input and output shafts 5 and 12. Stator 7a is located outside of rotor 7b. Stator 7a is fixedly installed onto the inner periphery of the bell housing of transmission case 21, whereas rotor 7b is fixedly mounted on the outer periphery of a cylindrical-hollow rotor shaft 22 and rotatably supported on transmission case 21 through cylindrical-hollow rotor shaft 22. A first axially-short shaft 23, simply a 1st short shaft, is splined to the rear end of cylindrical-hollow rotor shaft 22. 1st short shaft 23 is coaxially arranged with respect to transmission input shaft 5, and abutted or fitted to the front end of transmission input shaft 5 such that relative rotation of 1st short shaft 23 to transmission input shaft 5 is permitted. A low-rigidity rotating damper 24 is provided at the fitted portion of 1st short shaft 23 and transmission input shaft 5, such that low-rigidity rotating damper 24 is operably interleaved between 1st short shaft 23 and transmission input shaft 5. In the shown embodiment, low-rigidity rotating damper 24 is located just after motor/generator 7. Concretely, low-rigidity rotating damper 24 is located or installed between motor/generator 7 and automatic transmission 4. The detailed structure of low-rigidity rotating damper 24 is hereunder described.

As clearly shown in Fig. 3, low-rigidity rotating damper 24 is comprised of a drive plate 24a fixedly connected to 1st short shaft 23, a driven plate 24b splined to transmission input shaft 5, and a torsion spring 24c interleaved between drive plate 24a and driven plate 24b so as to achieve power transmission while providing a torsionally dampening action. That is, torsion spring 24c serves as a torsion damper.

In a similar manner to 1st short shaft 23 splined to the rear end of cylindrical-hollow rotor shaft 22, a second axially-short shaft 25, simply a 2nd short shaft, is splined to the front end of cylindrical-hollow rotor shaft 22. The previously-noted power-transmission shaft 6 is comprised of cylindrical-hollow rotor shaft 22, 1st short shaft 23, and 2nd short shaft 25. As can be seen from the cross section of Fig. 3, engine clutch 8 is interleaved between engine crankshaft 3a (see Fig. 1) and 2nd short shaft 25. An engine clutch case 8a and a flywheel 26 are both bolted to the rear end face of engine crankshaft 3a by means of a common bolt 27. In the hybrid drive apparatus of the embodiment, engine clutch 8 is a dry clutch, which is mainly comprised of clutch case 8a fixedly connected to engine crankshaft 3a, a clutch disk set, namely two disks 8b, 8b, assembled into clutch case 8a, a diaphragm spring 8c, and a pressure plate 8d. The inner periphery of each clutch disk 8b is fixedly connected to 2nd short shaft 25, which is splined to the front end of cylindrical-hollow rotor shaft 22 and constructs a part of power-transmission shaft 6. Engine clutch 8 is a normally-engaged clutch. Thus, in the normally-engaged state of engine clutch 8, the spring force of diaphragm spring 8c forces clutch disk 8b to be held against the friction surface of clutch case 8a through pressure plate 8d. Engine clutch 8 is provided to couple engine 3 with or uncouple it from motor/generator 7. In Fig. 3, reference sign 8e denotes a clutch release actuator used for clutch disengagement or clutch release. By pushing and elastically deforming the inner periphery of diaphragm spring 8c in the clutch-release direction (in one axial direction) through clutch release actuator 8e, the outer periphery of diaphragm spring 8c can be displaced in the axial direction opposite to the axial movement of the inner periphery of diaphragm spring 8c. As a result of deformation of the inner periphery of diaphragm spring 8c, clutch disk 8b moves apart from clutch case 8a, and whereby engine clutch 8 is shifted to its clutch-disengaged state wherein engine 3 is uncoupled from motor/generator 7.

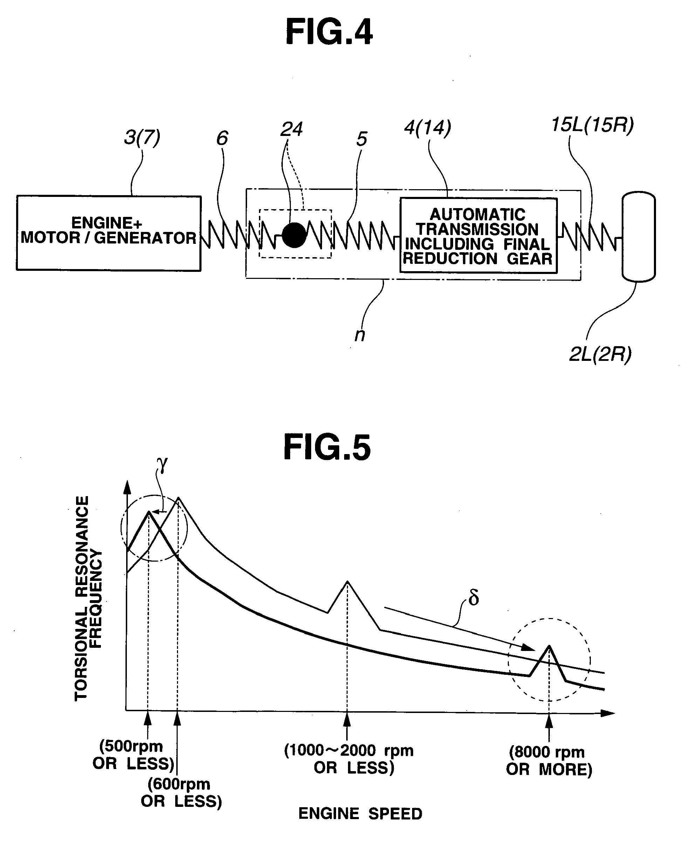

As previously discussed in reference to the real construction drawing shown in Fig. 3, in the powertrain configuration of the vehicle employing the hybrid drive apparatus of the embodiment, low-rigidity rotating damper 24 is installed after motor/generator 7 (see the installation position of forward brake 9 serving as the friction element of the transmission side in Fig. 1, and the installation positions of hybrid powertrain purpose-designed clutches 16, 16 in Figs. 2A-2B), but not just after engine 3. Rotating damper 24 may be installed at all arbitrary positions backward of motor/generator 7. Under a specified condition where engine clutch 8 (the friction element of the engine side) and forward brake 9 (the friction element of the transmission side) are both engaged, with rotating damper 24 installed after motor/generator 7, its torsional vibration system of the powertrain of the vehicle employing the hybrid drive apparatus of the embodiment shown in Figs. 1 and 3 can be represented by the simplified vibrating system model as shown in Fig. 4. As can be appreciated from the simplified vibrating system model of Fig. 4, motor/generator 7 rotates together with engine 3. Thus, the rotating motor/generator part of motor/generator 7 and the rotating engine part of engine 3 serve as a comparatively large rotational inertia mass. In other words, as a factor of excitation, the rotating motor/generator part of motor/generator 7 (i.e., the rotational inertia mass of motor/generator 7) is added to the rotating engine part of engine 3 (i.e., the rotational inertia mass of engine 3). Rotation of the large rotational inertia mass, constructed by the rotating motor/generator part and the rotating engine part, is transmitted through low-rigidity rotating damper 24 into transmission input shaft 5. The input rotation transmitted into transmission input shaft 5 is speed-changed by means of automatic transmission 4 including the final reduction gear of differential gear device 14. Then, the speed-changed rotation is further transmitted via rear wheel driveshafts 15L and 15R into drive wheels 2L and 2R. The rotating-motion transmission system of the vehicle employing the hybrid drive apparatus of the embodiment, that is, the vibrating system shown in Fig. 4, shows an engine-speed versus torsional resonance frequency characteristic indicated by the thick solid line in Fig. 5. As can be seen from the torsional resonance frequency characteristic indicated by the thick solid line in Fig. 5, in a very low engine speed range of 500 rpm or less (which range is out of the normal speed range of approximately 1000 to 2000 rpm), the rotating member, which is denoted by "n" and comprised of low-rigidity rotating damper 24, transmission input shaft 5, and final-reduction-gear equipped automatic transmission 4 (including differential gear device 14), acts as a vibrating mass, and thus a peak of the torsional resonance frequency occurs owing to engine torque fluctuations in the very low engine speed range of 500 rpm or less, as indicated by the one-dotted circle in Fig. 5. Additionally, in a high engine speed range of approximately 8000 rpm or more, only the low-rigidity rotating damper 24 acts as a vibrating mass, and thus a peak of the torsional resonance frequency occurs owing to engine torque fluctuations in the high engine speed range of approximately 8000 rpm or more, as indicated by the broken circle in Fig. 5. For the purpose of comparison between (i) the torsional resonance frequency characteristic (for the hybrid drive apparatus employing the rotating damper installed just after the engine) indicated by the fine solid line in Fig. 5 and indicated by the thick solid line in Fig. 10 and (ii) the torsional resonance frequency characteristic (for the hybrid drive apparatus of the embodiment employing low-rigidity rotating damper 24 installed after motor/generator 7) indicated by the thick solid line in Fig. 5, these two torsional resonance frequency characteristic diagrams are shown together in Fig. 5. As can be appreciated from comparison between the two torsional resonance frequency characteristic diagrams, respectively indicated by the thick solid line and the fine solid line in Fig. 5, in the case of the hybrid drive apparatus of the embodiment in which rotating damper 24 is installed after motor/generator 7, motor/generator 7 rotates together with engine 3 (see the simplified vibrating system model of Fig. 4), and thus the large rotational inertia mass, constructed by the rotating motor/generator part and the rotating engine part, is connected via rotating damper 24 to transmission input shaft 5. As a result of the large rotational inertia mass, i.e., the combined mass of the rotating motor/generator part (i.e., the rotational inertia mass of motor/generator 7) and the rotating engine part (i.e., the rotational inertia mass of engine 3), in the case of the hybrid drive apparatus of the embodiment in which rotating damper 24 is installed after motor/generator 7, it is possible to shift a peak of the torsional resonance frequency of the low engine speed side (in other words, a low-speed-side resonant-frequency peak-generating engine speed) in a lower-engine-speed direction, as clearly shown by the arrow γ in Fig. 5, in comparison with the hybrid drive apparatus employing the rotating damper installed just after the engine (as indicated by the fine solid line in Fig. 5 and indicated by the thick solid line in Fig. 10). That is, the peak of the torsional resonance frequency of the low engine speed side can be shifted outside of the normal engine speed range. Even if the shifted lower engine speed range corresponds to a speed range in which undesirable booming noise can be audibly perceived by the vehicle occupants, there is a less tendency that the vehicle occupants experience uncomfortable booming noise caused by the peak of the torsional resonance frequency of the very low engine speed range of 500 rpm or less. This is because, practically, the frequency where the engine speed goes into such a shifted lower engine speed range during vehicle driving is low. Thus, it is possible to avoid the problem of undesirable booming noise, audibly perceived and occurring in the vehicle compartments owing to the first resonant-frequency peak in the low engine speed range.

In addition to the above, in the case of the hybrid drive apparatus of the embodiment in which rotating damper 24 is installed after motor/generator 7, as having explained previously in reference to the simplified vibrating system model of Fig. 4 and the engine-speed versus torsional resonance frequency characteristic of Fig. 5, the vibrating mass that determines a high-speed-side resonant-frequency peak-generating engine speed (in a high speed range of approximately 8000 rpm or more) at which the second peak of the torsional resonance frequency occurs, is only the rotating damper 24. On the other hand, in the case of the hybrid drive apparatus in which the rotating damper j is installed just after engine a, as having explained previously in reference to the simplified vibrating system model of Fig. 9 and the engine-speed versus torsional resonance frequency characteristic of Fig. 10, the vibrating mass that determines a low-speed-side resonant-frequency peak-generating engine speed (in a low speed range of approximately 1000 to 2000 rpm) at which the second peak of the torsional resonance frequency occurs, includes only the motor/generator k. In the case of the hybrid drive apparatus of the embodiment in which rotating damper 24 is installed after motor/generator 7, in the second peak point of the torsional resonance frequency, in other words, in the high speed range of approximately 8000 rpm or more, in place of the motor/generator, only the rotating damper 24 serves as a vibrating mass. In other words, the motor/generator rotating part is excluded from the vibrating mass that determines a high-speed-side resonant-frequency peak-generating engine speed at which the second resonant-frequency peak occurs. The rotational inertia mass of rotating damper 24 is set to be less than that of the motor/generator. As a result of this, it is possible to shift a peak of the torsional resonance frequency of the high engine speed side (in other words, a high-speed-side resonant-frequency peak-generating engine speed) in a higher-engine-speed direction, as clearly shown by the arrow δ in Fig. 5. That is to say, the peak of the torsional resonance frequency of the high engine speed side can be shifted outside of the normal engine speed range. Thus, there is a less possibility that the vehicle occupants experience uncomfortable booming noise caused by the peak of the torsional resonance frequency of the high speed range of approximately 8000 rpm or more. This is because, practically, there is a less possibility that the engine speed goes into such a shifted higher engine speed range during vehicle driving. Thus, it is possible to avoid the problem of undesirable booming noise, audibly perceived and occurring in the vehicle compartments owing to the second resonant-frequency peak in the high engine speed range.

As set forth above, according to the hybrid drive apparatus of the embodiment, all of the first and second resonant-frequency peaks can be generated outside of the normal engine speed range. Thus, it is possible to avoid the previously-described problems arisen in case of the hybrid drive apparatus employing the rotating damper installed just after the engine, that is, the first problem that the vehicle occupants may experience excessively uncomfortable booming noise and vibration caused by the first resonant-frequency peak occurring in the very low engine speed range, and the second problem that booming noise, occurring in the low speed range owing to the second resonant-frequency peak, would be likely to cause the vehicle occupants to continually feel considerable discomfort during driving in the normal speed range.

Furthermore, according to the hybrid drive apparatus of the embodiment, it is possible to avoid the above-mentioned two problems without any slip control for engine clutch 8. That is, it is possible to attain the avoidance of the above-mentioned two problems without any new demerits, for example, deteriorated fuel economy, introduction of the expensive slip control system, and the difficulty of bringing an actual controlled variable for slip control closer to a desired value, in other words, undesirable hunting (undesirable overshoot or undershoot) for slip control executed for booming noise attenuation.

In the case of the hybrid drive apparatus of the embodiment shown in Figs. 1 and 3, wherein rotating damper 24 is installed just after motor/generator 7, but not installed between engine 3 and motor/generator 7, it is possible to use or adapt such a powertrain layout that rotating damper 24 is disposed or interleaved in the coaxially abutted shaft portion between transmission input shaft 5 and power-transmission shaft 6 serving as a central motor/generator shaft (22, 23, 25) penetrating the center of motor/generator 7 (see the cross section of Fig. 3). Additionally, as a countermeasure of noise attenuation of booming noise created due to torsional resonance, rotating damper 24 is formed as a low-rigidity torsional damper whose diameter is relatively small. Such a small-diameter rotating damper 24 having a low rigidity can provide the following operation and effects.

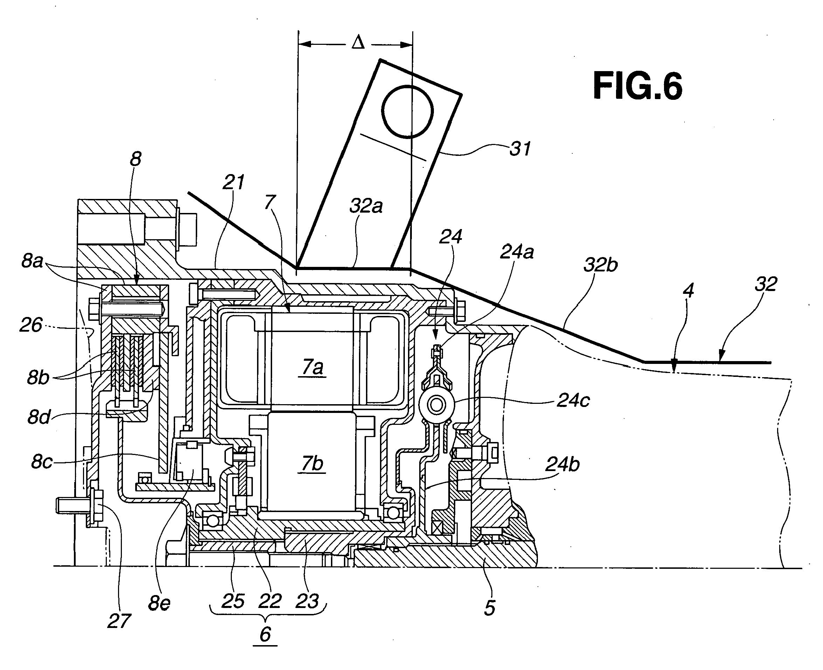

In case that rotating damper 24 is located just after motor/generator 7, the comparatively large-diameter motor/generator can be laid out in such a manner as to be forwardly shifted and located towards the engine by the axial length of rotating damper 24. In more detail, as can be appreciated from the longitudinal cross section shown in Fig. 6, it is possible to reduce or avoid such a tendency that the motor/generator storage space of transmission case 21 interferes with a transient sloped portion 32b of a vehicle floor panel 32, usually formed so that its level is gradually lowered from a substantially flat floor portion 32a, from which a shift lever 31 of the hybrid drive apparatus is projected, to the rear of the vehicle. For the reasons discussed above, axially forward shifting of motor/generator 7, corresponding to the axial length of rotating damper 24, contributes to the enhanced mountability of the hybrid drive apparatus. Furthermore, as can be seen from the cross sections of Figs. 3 and 6, by virtue of the combined features of (i) rotating damper 24 located just after motor/generator 7, (ii) rotating damper 24 interleaved in the coaxially abutted shaft portion of transmission input shaft 5 and power-transmission shaft 6 serving as the central motor/generator shaft (22, 23, 25), and (iii) the comparatively small-diameter low-rigidity rotating damper 24 for booming-noise attenuation, there is a less risk that rotating damper 24 itself functions as a factor inducing the undesirable interference between the hybrid drive apparatus and the transient sloped portion 32b of vehicle floor panel 32. Moreover, the previously-discussed layout (installation position) and down-sizing of rotating damper 24, as shown in Fig. 6, contributes to the reduced axial length Δ of the hybrid drive apparatus, a part of which being located just under the substantially flat floor portion 32a from which shift lever 31 is projected. By virtue of the reduced axial length Δ of the hybrid drive apparatus, it is possible to ease the concern in which the hybrid drive apparatus and the floor-panel transient sloped portion 32b interfere to each other.

In the shown embodiment, engine clutch 8, serving as the friction element of the engine side, is constructed by a dry clutch instead of using a wet-disk clutch in which friction disks are operated in a lubricating oil bath, and additionally engine clutch 8 is interleaved between engine 3 and motor/generator 7. This eliminates the necessity of lubricating oil, in other words, an oil circuit, thus ensuring the more simplified configuration of the powertrain of the hybrid drive apparatus, the reduced rate of occurrence of the hybrid drive system failure, and the enhanced reliability of the system. As is generally known, a wet clutch is often constructed as a multiple disk clutch. On the contrary, engine clutch 8, comprised of a dry clutch, does not need the considerably increased number of friction disks. In the shown embodiment, only the two clutch disks 8b, 8b are used as friction disks. Thus, it is possible to remarkably shorten the entire axial length of the hybrid drive apparatus, thereby allowing the more excellent mountability.

Additionally, flywheel 26, interleaved between engine 3 and engine clutch 8, acts to smoothly reduce fluctuations in engine speed. Smoothly reducing engine speed fluctuations by way of flywheel 26 interleaved between engine 3 and engine clutch 8, contributes to a further reduction in the rigidity of rotating damper 24, in other words, downsizing (a smaller diameter) of rotating damper 24. Thus, it is possible to more certainly avoid the problem of interference between the hybrid drive apparatus and the floor-panel transient sloped portion 32b.

The entire contents of Japanese Patent Application No. 2005-114493 (filed April 12, 2005) are incorporated herein by reference.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

## Claims

1. An on-vehicle hybrid drive apparatus comprising:
an engine (3);
a transmission (4);
a power-transmission shaft provided to transmit rotation generated from the engine (3) into the transmission (4);
a motor-and-generator (7) fitted on the power-transmission shaft and installed between the engine (3) and the transmission (4);
a first friction element (8) installed on the engine side for coupling the engine (3) with or uncoupling it from the motor-and-generator (7);
a second friction element (9; 16) installed on the transmission side for coupling the motor-and-generator (7) with or uncoupling it from a transmission output shaft (12); and
a rotating damper (24) installed after the motor-and-generator (7) and disposed in a rotating-motion transmission system ranging from the motor-and-generator (7) to the transmission output shaft (12).

2. The on-vehicle hybrid drive apparatus as claimed in claim 1, wherein:
the rotating damper (24) is installed just after the motor-and-generator (7).

3. The on-vehicle hybrid drive apparatus as claimed in claim 2, wherein:
the power-transmission shaft comprises a coaxially abutted shaft portion that a central motor-and-generator shaft (6) penetrating a center of the motor-and-generator (7) and a transmission input shaft (5) are coaxially abutted to each other; and
the rotating damper (24) is interleaved in the coaxially abutted shaft portion of the central motor-and-generator shaft (6) and the transmission input shaft (5).

4. The on-vehicle hybrid drive apparatus as claimed in at least one of the preceding claims 1 to 3, wherein:
the first friction element comprises a dry clutch (8) interleaved between the engine (3) and the motor-and-generator (7).

5. The on-vehicle hybrid drive apparatus as claimed in at least one of the preceding claims 1 to 4, further comprising:
a flywheel (26) rotating together with the power-transmission shaft and interleaved between the engine (3) and the first friction element (8).

6. The on-vehicle hybrid drive apparatus as claimed in at least one of the preceding claims 1 to 5, wherein:
the second friction element (9) is disposed in the transmission (4) for coupling the motor-and-generator (7) with or uncoupling it from the transmission output shaft (12).

7. The on-vehicle hybrid drive apparatus as claimed in at least one of the preceding claims 1 to 5, wherein:
the second friction element (16) is disposed in the transmission input shaft (5) for coupling the motor-and-generator (7) with or uncoupling it from the transmission output shaft (12).

8. The on-vehicle hybrid drive apparatus as claimed in at least one of the preceding claims 1 to 5, wherein:
the second friction element (16) is disposed in the transmission output shaft (12) for coupling the motor-and-generator (7) with or uncoupling it from each of drive wheels (2R, 2L).

9. The on-vehicle hybrid drive apparatus as claimed in claim 3, wherein:
under a specified condition where the first friction element (8) and the second friction element (9; 16) are both engaged, a torsional vibration system is configured to connect both of a rotational inertia mass of the motor-and-generator (7) and a rotational inertia mass of the engine (3) via the rotating damper (24) to the transmission input shaft (5), and in a low engine speed range the rotating damper (24), the transmission input shaft (5), and a rotational inertia mass of the transmission (4) act as a vibrating mass and cooperate with each other to decrease a first resonant-frequency peak-generating engine speed to an engine speed range lower than a normal engine speed range, and in a high engine speed range only the rotating damper (24) acts as a vibrating mass to increase a second resonant-frequency peak-generating engine speed to an engine speed range higher than the normal engine speed range.

10. The on-vehicle hybrid drive apparatus as claimed in claim 9, wherein:
a rotational inertia mass of the rotating damper (24) is set to be less than a rotational inertia mass of the motor-and-generator (7).
